# EUROPEAN PATENT SPECIFICATION

(11) **EP 3 202 214 B1**
(45) Date of publication and mention of the grant of the patent: **25.08.2021**
(21) Application number: 15739739.9
(22) Date of filing: 08.07.2015
(51) Int. Cl.: H04W 8/08, H04W 36/00, H04W 76/22

(54) **PACKET DATA NETWORK CONNECTION ESTABLISHMENT DURING HANDOVER**
PAKETDATENNETZVERBINDUNGSAUFBAU WÄHREND DER ÜBERGABE
ÉTABLISSEMENT D'UNE CONNEXION DANS UN RÉSEAU DE DONNÉES PAR PAQUETS PENDANT UN TRANSFERT

(30) Priority: 03.10.2014 US 201462059742 P
(43) Date of publication of application: 09.08.2017
(73) Proprietor: Intel Corporation, Santa Clara, CA 95054 (US)
(72) Inventor: STOJANOVSKI, Alexandre, 75020 Paris (FR); VENKATACHALAM, Muthaiah, Beaverton, Oregon 97006 (US); SIOW, Eric, Beaverton, Oregon 97007 (US)
(74) Representative: Goddar, Heinz J.
(86) International application number: PCT/US2015/039616
(87) International publication number: WO 2016/053435

(56) References cited:
- WO-A1-2014/113084
- WO-A1-2014/119921
- US-A1- 2011 075 675
- US-A1- 2012 207 129

## Description

### BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in an uplink (UL) transmission. Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems, the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

In homogeneous networks, the node, also called a macro node, can provide basic wireless coverage to wireless devices in a cell. The cell can be the area in which the wireless devices are operable to communicate with the macro node. Heterogeneous networks (HetNets) can be used to handle the increased traffic loads on the macro nodes due to increased usage and functionality of wireless devices. HetNets can include a layer of planned high power macro nodes (or macro-eNBs) overlaid with layers of lower power nodes (small-eNBs, micro-eNBs, pico-eNBs, femto-eNBs, or home eNBs [HeNBs]) that can be deployed in a less well planned or even entirely uncoordinated manner within the coverage area (cell) of a macro node. The lower power nodes (LPNs) can generally be referred to as "low power nodes", small nodes, or small cells.

In LTE, data can be transmitted from the eNodeB to the UE via a physical downlink shared channel (PDSCH). A physical uplink control channel (PUCCH) can be used to acknowledge that data was received. Downlink and uplink channels or transmissions can use time-division duplexing (TDD) or frequency-division duplexing (FDD). Background art regarding handover and Packet Data Network (PDN) connection management is represented by the Patent Publications No. US 2012/207129 A1 and WO 2014/113084 A1.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a coordinated selected Internet Protocol (IP) traffic offloading (CSIPTO) procedure in accordance with an example;
FIG. 2 illustrates a coordinated selected Internet Protocol (IP) traffic offloading (CSIPTO) procedure in accordance with an example;
FIG. 3 illustrates initial traffic flow for a user equipment (UE) using a first packet data network (PDN) connection and a modified traffic flow for the UE using a second PDN connection that is triggered based on UE mobility in accordance with an example;
FIG. 4 illustrates initial traffic flow for a user equipment (UE) using a first packet data network (PDN) connection and a modified traffic flow for the UE using a second PDN connection that is triggered based on UE mobility in accordance with an example;
FIG. 5 illustrates initial traffic flow for a user equipment (UE) using a first packet data network (PDN) connection and a modified traffic flow for the UE using a second PDN connection that is triggered based on UE mobility in accordance with an example;
FIG. 6 illustrates initial traffic flow for a user equipment (UE) using a first packet data network (PDN) connection and a modified traffic flow for the UE using a second PDN connection that is triggered based on UE mobility in accordance with an example;
FIG. 7 illustrates a handover procedure that includes packet data network (PDN) connection establishment for a user equipment (UE) in accordance with an example;
FIG. 8 illustrates a service request procedure that includes packet data network (PDN) connection establishment for a user equipment (UE) in accordance with an example;
FIG. 9 illustrates a handover procedure that includes packet data network (PDN) connection establishment for a user equipment (UE) in accordance with an example;
FIG. 10 depicts functionality of a user equipment (UE) operable to establish a new packet data network (PDN) connection during handover in accordance with an example;
FIG. 11 depicts functionality of a user equipment (UE) operable to establish a new packet data network (PDN) connection during a service request in accordance with an example;
FIG. 12 depicts functionality of a mobility management entity (MME) operable to facilitate establishment of a new packet data network (PDN) connection for a user equipment (UE) during handover in accordance with an example;
FIG. 13 depicts functionality of a source eNB (eNB) operable to facilitate establishment of a new packet data network (PDN) connection for a user equipment (UE) during handover in accordance with an example; and
FIG. 14 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

The present invention is defined by the subject-matter of the appended independent claims. Preferred embodiments are defined in the dependent claims.

Before the present technology is disclosed and described, it is to be understood that this technology is not limited to the particular structures, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

The 3GPP LTE system can include radio base stations (or eNBs), a mobility management entity (MME), a serving gateway (SGW), and packet data network (PDN) gateway (PGW). The MME is a control plane entity, whereas the SGW and the PDN gateway are generally user plane entities. 3GPP Release 8 aimed at network architecture simplification, and in particular, at defining a flat architecture. This goal was achieved to some extent given that user traffic traverses three user plane nodes (eNB, SGW and PDN gateway) at most, as compared to the 2G/3G architecture where the number of traversed nodes is four. In order to obtain access to an Internet Protocol (IP)-based Packet Data Network (PDN), a user equipment (UE) can establish a PDN connection with the PDN gateway. From the UE's perspective, the PDN connection can be equivalent to an IP interface. An IP address/prefix associated with the PDN connection can be assigned by the PDN gateway, which can serve as a mobility anchor. In other words, regardless of the UE's mobility from one location to another, an ingress point to the IP network cloud is the PDN gateway.

In later 3GPP releases, features were defined for user traffic offload. This feature can be defined as selective IP traffic offload (SIPTO). In 3GPP Release 10, SIPTO allows for reassigning a new PDN gateway that is located closer to the UE's current location. SIPTO can include detaching the UE with a cause value that invites the UE to reattach, and then the UE reattaches to the network at a later time. The new PDN gateway can be selected that is closer to the UE's current location. One benefit of SIPTO is that the PDN connection can be streamlined. The PDN connection is a layer 2 construct, or tunnel, that connects the UE to the PDN gateway. The PDN connection can be considered a layer 2 link between the UE and the PDN gateway. The PDN connection can connect the UE to a layer 3 ingress point, which is at the PDN gateway. In other words, the UE can connect to a layer 3 IP cloud via the PDN gateway.

As the UE moves away from its initial location, traffic routing can become sub optimal because the traffic has to be backhauled via the layer 2 tunnel, which is the PDN connection, to an initial PDN gateway before being provided to the layer 3 IP cloud. This procedure can be streamlined by reassigning the PDN gateway as the UE moves. One problem with reassigning the PDN gateway is that each time you reassign the PDN gateway, a new IP address is assigned, which may break the continuity of some services. 3GPP Release 10 allows this reassignment over the PDN gateway as the UE moves, while the PDN gateway still resides within the core network.

3GPP Release 12 includes a SIPTO feature, which is referred to as SIPTO at a local network (or SIPTO@LN). This feature allows for selection of a PDN gateway that is located close to a network edge. In one configuration, the PDN gateway can be collocated with the eNB. When the PDN gateway is collocated with the eNB, then traffic can be routed directly from the eNB function to the collocated PDN function without going through the SGW function.

The traffic offload feature, or SIPTO, can allow for offloading specific traffic types (e.g., low-valued Internet traffic) from the EPS user plane onto a traditional IP-routed network. The closer the traffic offload point is to the network edge, the increased potential cost savings due to offload onto a cheaper transport infrastructure. However, there is an apparent contradiction between traffic offload close to the network edge and UE mobility, which can have adverse effects on user experience. For example, both SIPTO and SIPTO@LN are break-before-make features. In other words, an old PDN connection can be released before the new PDN connection is established. As a result, the closer the PDN gateway resides to the network edge, the frequency of service breaks due to IP address change can be increased.

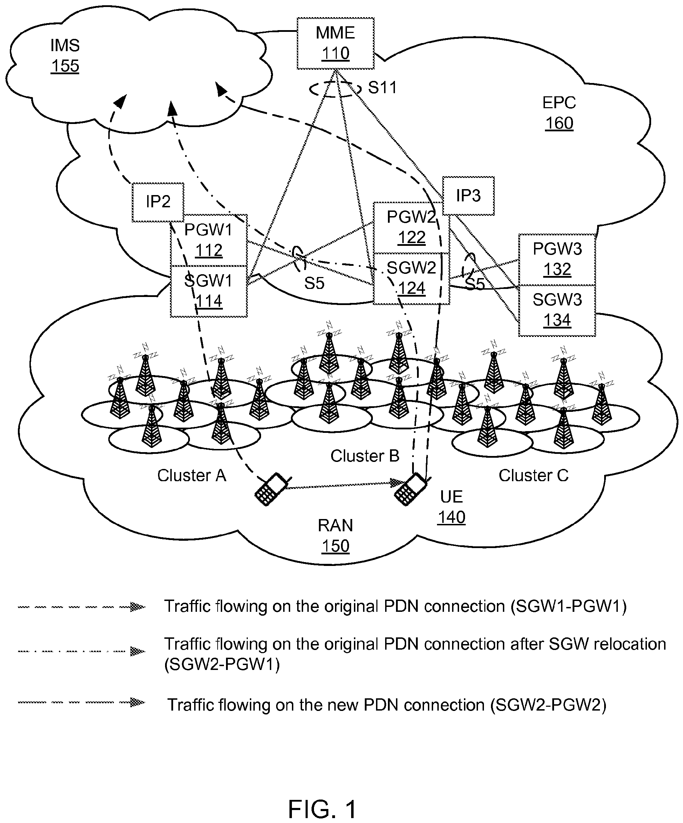

FIG. 1 illustrates an exemplary coordinated selected Internet Protocol (IP) traffic offloading (CSIPTO) procedure. In 3GPP Release 13, CSIPTO aims at reconciling UE mobility with traffic offload that is close to the network edge. CSIPTO can allow for make-before-break operation, whereby a new PDN connection is established before the old PDN connection is released. The make-before-break operation can be leveraged by supporting applications to perform an "application-layer" handover. In one example, the CSIPTO procedure shown in FIG. 1 does not apply to SIPTO@LN, in which the PGW function (referred to as LGW) is collocated with the eNB.

CSIPTO is a make-before-break variant of SIPTO. The SIPTO feature in 3GPP Release 10, as previously described, is a break-before-make feature. In other words, the UE has to release a previous PDN connection before requesting a new PDN connection, which can result in a break. On the other hand, CSIPTO can allow two PDN connections to the same IP network, wherein the two PDN connections can coexist in parallel at the UE. CSIPTO can rely on an application's capability to gracefully switch or migrate traffic from the previous PDN connection to the new PDN connection. Therefore, in CSIPTO, at least one PDN connection can be present at all times for the UE.

As shown in FIG. 1, a user equipment (UE) 140 within a radio access network (RAN) 150 can initially be in cluster A. Cluster A can represent a cluster of cells, wherein each cell is associated with a serving evolved node B (eNB) or a serving radio base station. While in cluster A, the UE 140 can establish a packet data network (PDN) connection with a first PDN gateway 112 (PGW1). The UE 140 can be assigned an Internet Protocol (IP) address, which is referred to as IP2. The serving gateway (SGW) functionality for the UE 140 can be SGW1 114 when the UE 140 is in cluster A. As shown in FIG. 1, a first dashed line can indicate traffic flowing from an initial PDN connection (SGW1-PGW1), which can enable the UE 140 to access an IP Multimedia Subsystem (IMS) 155.

As UE moves to cells of cluster B, the SGW functionality can become relocated, such that the SGW functionality for the UE 140 can be SGW2 124. However, the PGW functionality for the UE 140 can be as initially assigned (i.e., PGW1 112). When the UE is in cluster B, the traffic can go through the SGW2 124, and then be backhauled to the PGW1 112 via an S5 interface. At this point, the traffic can break out to the IP domain. In addition, the same IP address (i.e., IP2) can be assigned to the UE 140 when the UE 140 is in cluster B. In this scenario, even though the UE 140 has moved closer to PGW2 122, the UE's traffic may still flow via the previous PDN connection. As shown in FIG. 1, a second dashed line can indicate traffic flowing from the initial PDN connection after SGW relocation (SGW2-PGW1), which can enable the UE 140 to access the IMS 155.

With CSIPTO, a mobility management entity (MME) 110 can indicate to the UE 140 a possibility to streamline the PDN connection. The MME 110 can be located in an Evolved Packet Core (EPC) 160. The MME 110 can send the indication to the UE 140 when the UE 140 has moved to cluster B. Streamlining the PDN connection can result in a more optimized traffic flow with respect to the PDN connection. Based on the indication, the UE 140 can request a new PDN connection. The new PDN connection can be established with the PDN gateway (i.e., PGW2) that is closer to the UE's current location in cluster B. As shown in FIG. 1, a third dashed line can indicate traffic flowing from the new PDN connection (SGW2-PGW2), which can enable the UE 140 to access the IMS 155. The establishment of the new PDN connection can result in the UE 140 being assigned a new IP address (i.e., IP3). At this point (i.e., when the UE 140 is in cluster B), the UE 140 can have two PDN connections in parallel - a first PDN connection that is associated with IP2 and a second PDN connection that is associated with IP3. The first PDN connection can flow through the SGW2 124 and the PGW1 112 towards the IMS 155. The second PDN connection can flow through the SGW2 124 and the PGW2 122 towards the IMS 155.

Depending on application capability, the UE 140 may be able to seamlessly migrate traffic from the original PDN connection to the new PDN connection when moving from cluster A to cluster B, even though an IP address change occurs between the two PDN connections. For example, if the UE 140 is downloading videos using a video-sharing application, videos that are encoded using hypertext transfer protocol (HTTP) based adaptive streaming techniques can allow a video streaming client, such as the UE 140, to continue streaming the video even when the IP address has changed. In another example, if the UE 140 is streaming dynamic adaptive streaming for HTTP (DASH) content, the UE 140 can gracefully switch from one IP address (e.g., IP2) to another IP address (e.g., IP3). When all of the traffic has moved to the new IP address, the UE 140 can release the previous PDN connection.

Similarly, if the UE 140 moves to cluster C, then the UE's traffic flow can be adjusted, such that SGW functionality for the UE 140 can be relocated to SGW2 134. In addition, a new PDN connection can be established with the PDN gateway (i.e., PGW3) that is closer to the UE's current location in cluster C.

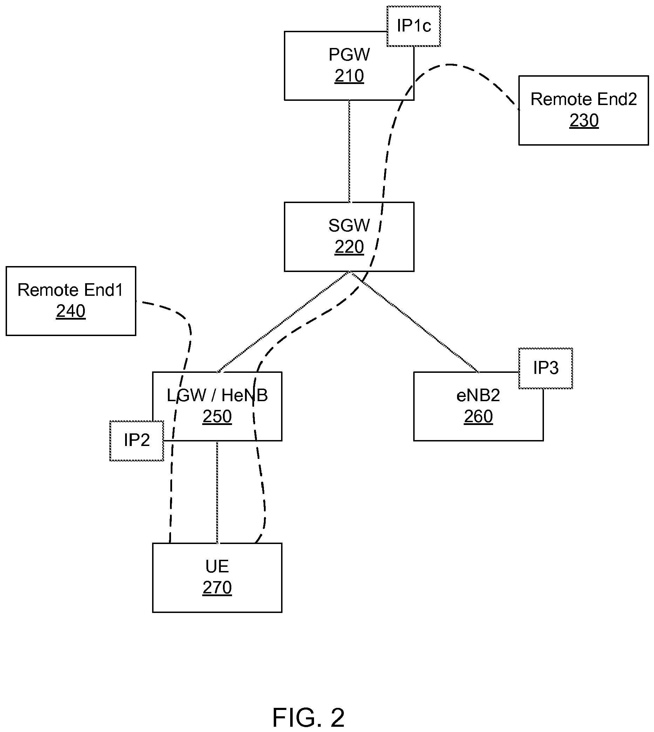

FIG. 2 illustrates an exemplary coordinated selected Internet Protocol (IP) traffic offloading (CSIPTO) procedure. In this configuration, a user equipment (UE) 270 can maintain two packet data network (PDN) connections for access to the same network. The UE 270 can maintain a first PDN connection with Internet Protocol (IP) address preservation (e.g., IP1c) and a second PDN connection without IP address preservation (e.g., IP2 and/or IP3). Traffic flow for applications being executed on the UE 270 can be routed to the first PDN connection or the second PDN connection depending on needs for IP address preservation. In one example, the CSIPTO procedure illustrated in FIG. 2 does not allow for make-before-break operation when switching from IP2 to IP3 because SIPTO@LN with a collocated local gateway (LGW), as defined in 3GPP Release 12, assumes that the old PDN connection (i.e., IP2) is released when the UE 270 leaves an evolved node B 250 (e.g., a home eNB). In other words, the UE 270 will break the first PDN connection (i.e., IP2) after leaving the eNB 250, which can occur before the second PDN connection (i.e., IP3) is established.

As shown in FIG. 2, the UE 270 can initially start with two PDN connections. A first PDN connection can be with a packet data network (PDN) gateway (PGW) 210, which traditionally resides in the core network. The first PDN connection can use an IP address represented as IP1c, wherein the "c" stands for continuity. Some applications that run on the UE 270 can use IPlc since some applications are unable to handle IP address changes, so there is a need to keep a stable PDN connection function that does not get reassigned. In other words, even when the UE 270 moves from one cell to another cell, this stable PDN connection (i.e., IP1c) can be maintained for the UE 270. In addition, the UE 270 can have a second PDN connection, which is in parallel or coexists with the first PDN connection. The second PDN connection can be with a local gateway (LGW) that is collocated with the eNB 250 (e.g., a home eNB). The LGW can provide PGW functionality for the UE 270. The second PDN connection can use an IP address represented as IP2. Therefore, the UE 270 can have the first PDN connection (i.e., IP2), which enables the UE 270 to be connected with a first remote end 240. In addition, the UE 270 can have the second PDN connection (i.e., IP1c), which enables the UE 270 to be connected with a second remote end 230

When the UE 270 moves toward a second eNB 260 (e.g., eNB2), the UE 270 can be invited to request a new PDN connection. The second eNB 260 can also be referred to as a radio base station. The new PDN connection can eventually replace the initial second PDN connection (i.e., IP2) with the LGW that is collocated with the eNB 250. The new PDN connection can use an IP address represented as IP3. Once the UE 270 has migrated all traffic from IP2 to IP3, the UE 270 can release the PDN connection associated with IP2. However, the UE 270 can keep the PDN connection associated with IPlc because this connection can be used for traffic that is unable to handle IP address breaks. The configuration shown in FIG. 2 can include a stable PDN connection (that is associated with IP1c) and a dynamic PDN connection (that is switched from IP2 to IP3).

In one example, the configuration shown in FIG. 2 can be useful with respect to IP Multimedia Subsystem (IMS) traffic. IMS can be used for video chatting, voice calls, video calls, etc. For IMS traffic to occur while traffic is being offloaded in an optimal manner close to the radio edge, a stable connection (e.g., IP1c) can be used. For example, a signaling connection (e.g., for session initiation protocol (SIP) signaling) can utilize the stable connection (e.g., IP1c). IMS can allow the UE 270 to use one IP address for the SIP signaling and another IP address for user plane traffic (e.g., video calls). In this example, the SIP signaling can be performed using the stable connection (e.g., IP1c), and the user plane traffic can be moved from IP2 to IP3 based on UE mobility. The user plane traffic can be moved by sending a SIP invite message from the UE 270. When the UE 270 is engaged in peer-to-peer (P2P) communications (e.g., voice or video calls) with a remote party, when the new IP address becomes available (e.g., IP3), the UE 270 can send the SIP invite message over the stable PDN connection (e.g., IP1c). The SIP invite message can be conveyed to a remote IP address (e.g., IP2), and the remote IP address can determine that all media associated with the UE 270 going forward is to be moved to another IP address (e.g., IP3).

The configuration shown in FIG. 2 can sustain a service break when the PDN connection associated with IP2 is switched to the PDN connection associated with IP3. In this case, the PDN connection for IP2 can be associated with the eNB 250 (e.g., a home eNB and the collocated LGW). The UE 270 can initially have the PDN connections with IP2 and IP1c. The UE 270 can move outside the coverage of the eNB 250 and within coverage of the second eNB 260. The stable PDN connection (i.e., IP1c) can undergo a classical handover, which can result in all user plane paths being moved towards the second eNB 260. However, the other PDN connection (which is established via the LGW collocated with the eNB 250) will be released, and the UE 270 can request another PDN connection with the second eNB 260. Therefore, the PDN connection with IP2 can be broken before the PDN connection with IP3 is established.

By collocating the LGW with the eNB 250 (as exemplified with SIPTO@LN), the eNB 250 with the LGW can be relatable to a Wi-Fi Access Point (AP) with an integrated IP router. One problem with such a collocation is that the UE's IP address will be changed whenever the UE 270 moves from one eNB to another eNB. While this is not a concern for nomadic mobility (as shown by the wide adoption of Wi-Fi for specific use cases), it was traditionally considered a problem for full mobility service that is expected from cellular networks. However, IP address change can be considered less of a concern for future cellular networks. With recent evolutions in information technology (IT) standards and in the industry at large, applications are becoming more resilient and are learning to survive IP address changes. For example, peer-to-peer applications may handle IP address changes by using application-layer signaling, such as SIP. The peer-to-peer applications can include voice or video calls, IMS-based multimedia telephony service, etc. Applications operating in a client-server mode (e.g., HTTP-based streaming applications, such as DASH applications) may handle IP address changes. Applications operating in the client-server mode may handle IP address changes by relying on globally unique identification of content segments. In addition, transport-layer protocols (e.g., Multi-Path TCP) may be capable of surviving IP address changes.

Although some applications may be able to survive the IP address change, the service break can be noticeable in the absence of network support, in particular if a frequency of IP address change is relatively high and/or if the new IP address (e.g., IP3) becomes available only after release of the old IP address (e.g., IP2). The release of the old IP address (e.g., IP2) before the establishment of the new IP address (e.g., IP3) can be referred to as a break-before-make operation.

The present technology describes specific enhancements for CSIPTO. One enhancement can involve enabling make-before-break operation for CSIPTO in an increased number of use cases, including the case when the LGW is collocated with the eNB. Another enhancement can involve enabling automatic PDN connection establishment upon handover. In other words, the creation of the PDN connection can be combined with the handover procedure. In previous solutions, the handover procedure is a radio level procedure, whereas the PDN connection establishment is an upper layer procedure (or a non-access stratum layer procedure), so the two procedures do not occur simultaneously. In previous solutions, once the UE is handed over to a second eNB, this is the end of the handover procedure. Afterwards, the UE can get an invitation to establish a new PDN connection (e.g., IP3). One drawback with this previous solution is that additional time is needed to instruct the UE to request the new PDN connection and then for establishing the new PDN connection, which can have an impact on the service break. The service break can become more noticeable to an end user (e.g., a user of the UE). Another drawback with the previous solution is that an increased amount of signaling occurs between the UE and the core network for establishing the new PDN connection. In other words, the request for the new PDN connection and the establishment of the new PDN connection involves increased signaling, which can be unnecessary if the PDN connection is combined with the handover procedure. In addition, undesirable race conditions can occur (e.g., a new handover can be triggered while the PDN connection is being established).

In previous solutions, the PDN connection and handover procedures are dissociated. After the UE is handed over to the target cell (i.e., after completion of the handover procedure), the network can determine to trigger CSIPTO. The network can inform the UE that it should request a new PDN connection, and in response, the UE can request the new PDN connection. Information for the new PDN connection can be sent from a mobility management entity (MME) to the UE in a non-access stratum (NAS) message. The IP address assignment can be performed at the end of PDN connection establishment using Internet Engineering Task Force (IETF) mechanisms. However, in previous solutions, the PDN connection establishment is a standalone procedure as compared to the handover procedure. The dissociation of the PDN connection establishment procedure and the handover procedure can unnecessarily generate increased signaling and consume an additional amount of time.

Therefore, the present technology can involve the automatic creation of PDN connection during handover. In other words, the PDN connection establishment procedure can be integrated with the handover procedure. The PDN connection assignment can be performed as part of the handover procedure and all PDN connection information (including the assigned IP address/prefix) can be expedited on the same RRC message that carries the Handover Command. In addition, the present technology can involve enabling make-before-break operation for CSIPTO in additional cases, including the case where the LGW is collocated with the eNB. When an SGW function is located in the EPC, the present technology can enable a release of the SIPTO@LN PDN connection. When the SGW function is collocated with the eNB (e.g., the target eNB), the present technology relies on a novel S5 reference point between the LGW function in a source eNB and the SGW function in the target eNB.

Some advantages of the present technology are common with CSIPTO. One advantage includes optimal IP routing because the traffic can be broken relatively close to the radio edge. For example, if two UEs are under the same eNB, the traffic can be routed locally. There will be no backhaul link or hair pinning. In addition, by breaking the traffic in a timely manner, tunnels can be avoided in the user plane, which in the 3GPP architecture are based on General packet radio service (GPRS) Tunneling Protocol User Plane (GTP-U). Therefore, one advantage of the present technology is the avoidance of GTP-U encapsulation. An additional advantage is that the bulk of user plane traffic can be carried by off-the-shelf IP routers. The present technology can minimize control plane signaling by performing automatic IP address assignment as part of the handover. The present technology can allow for make-before-break operation, even when the IP address is hosted at the eNB. In addition, the present technology can potentially enable upcoming (5G) architecture evolution by paving the way towards a more flat mobile network architecture, in which an increased amount of user traffic breaks out of the EPS at the eNB.

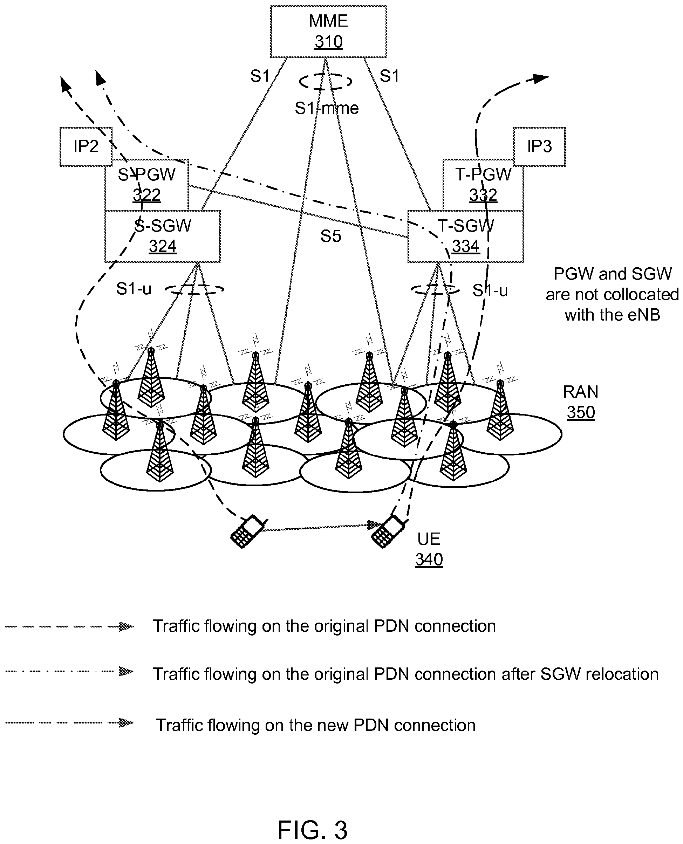

FIG. 3 illustrates initial traffic flow for a user equipment (UE) 340 using a first packet data network (PDN) connection and a modified traffic flow for the UE 340 using a second PDN connection that is triggered based on UE mobility. The UE 340 can initially be located within a group of cells. In this configuration, the UE 340 can establish a packet data network (PDN) connection with a source PDN gateway 322 (S-PGW). The UE 340 can be assigned an Internet Protocol (IP) address, which is referred to as IP2. The IP address (i.e., IP2) can be hosted on the S-PGW 322. The serving gateway (SGW) functionality for the UE 340 can be a source SGW (e.g., S-SGW 324). As shown in FIG. 3, a first dashed line can indicate traffic flowing from an initial PDN connection (S-SGW - S-PGW).

In this example, the S-PGW 322 and the S-SGW are not collocated with the evolved node B (eNB) in a radio access network (RAN) 350. Rather, the S-PGW 322 and the S-SGW can be located in an evolved packet core (EPC). While the S-PGW 322 and the S-SGW can be selected close to a network edge, in this case, they are not collocated with a radio access network (RAN) node, such as the eNB.

As the UE 340 moves to a different group of cells, the traffic from the previous PDN connection can instead go through a target SGW 334. In other words, the SGW functionality can become relocated, such that the SGW functionality for the UE 340 can be the target SGW 334. However, the PGW functionality for the UE 340 can be as initially assigned (i.e., the source PGW 322). Therefore, even when the UE 340 has moved closer to a target PGW 332, the UE's traffic may still flow via the previous PDN connection. In particular, the UE's traffic can flow on an S1-U + S5 path. As shown in FIG. 3, a second dashed line can indicate traffic flowing from the initial PDN connection after SGW relocation (T-SGW - S-PGW).

With CSIPTO, a mobility management entity (MME) 310 can indicate to the UE 340 a possibility to streamline the PDN connection. Streamlining the PDN connection can result in a more optimized traffic flow with respect to the PDN connection. Based on the indication, the UE 340 can request a new PDN connection. The new PDN connection can be established with the target PGW 332 that is closer to the UE's current location. The information related to the new PDN connection can be sent from the MME 310 to the UE 340 in a non-access stratum (NAS) message. As shown in FIG. 3, a third dashed line can indicate traffic flowing from the new PDN connection (T-SGW - T-PGW). A direct S5 path can connect the S-PGW 322 and the T-SGW 334. The establishment of the new PDN connection can result in the UE 340 being assigned a new IP address (i.e., IP3). At this point, the UE 340 can have two PDN connections in parallel - a first PDN connection that is associated with IP2 and a second PDN connection that is associated with IP3.

In the configuration shown in FIG. 3, the establishment of the new PDN connection (T-SGW - T-PGW) can occur during the handover procedure. In other words, the establishment of the new PDN connection can be piggybacked on the handover procedure, as opposed to having two separate, dissociated procedures as in previous solutions.

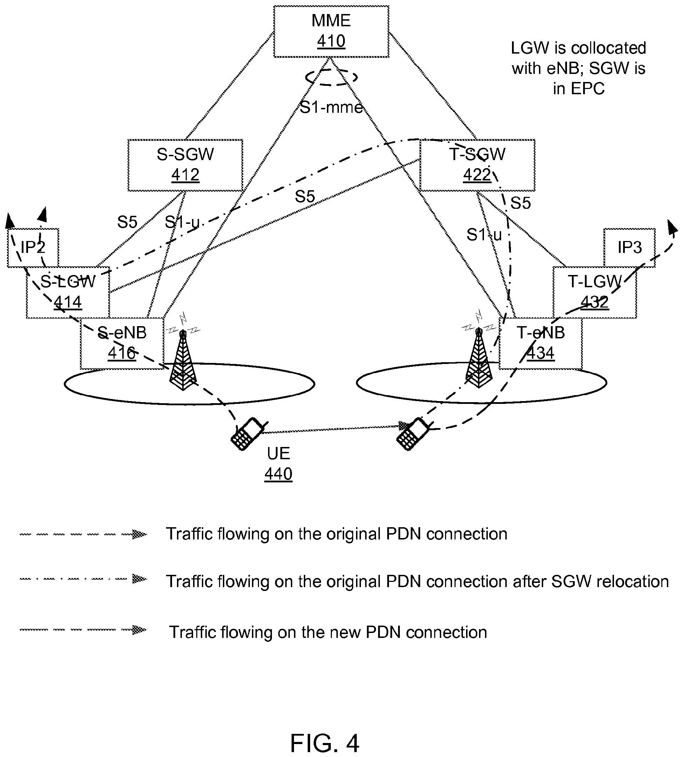

FIG. 4 illustrates initial traffic flow for a user equipment (UE) 440 using a first packet data network (PDN) connection and a modified traffic flow for the UE 440 using a second PDN connection that is triggered based on UE mobility. The UE 440 can initially be located in proximity to a source eNB 416. In this configuration, the UE 440 can establish a packet data network (PDN) connection with a source local gateway (S-LGW) 414 with PDN gateway (PGW) functionality. The UE 440 can be assigned an Internet Protocol (IP) address, which is referred to as IP2. The serving gateway (SGW) functionality for the UE 440 can be a source SGW (e.g., S-SGW 412). As shown in FIG. 4, a first dashed line can indicate traffic flowing from an initial PDN connection (S-eNB - S-LGW).

In this example, the S-LGW 414 can be collocated with a source eNB 416. In addition, the S-SGW 412 can be located in an evolved packet core (EPC). The UE 440 can initially be connected to the source eNB 416 (or serving eNB), which can be a home eNB. Although the UE 440 has the S-SGW 412 that is within the network, the UE's traffic does not have to be hair pinned via the S-SGW 412. Instead, the UE 440 can shortcut the traffic directly from the S-eNB 416 to the collocated LGW function without going through the S1-U and downwards via the S5.

The UE 440 can move to a target eNB (T-eNB) 434. The T-eNB 434 can be associated with a target LGW (T-LGW) 432. The UE 440 can temporarily keep the previous PDN connection (i.e., IP2) in order to allow the UE 440 to migrate traffic from the previous PDN connection to the new PDN connection. The UE 440 can temporarily maintain the old PDN connection by performing hair pinning or tromboning with the target SGW (T-SGW) 422. The PGW functionality for the UE 440 can be as initially assigned (i.e., the source LGW 414). As shown in FIG. 4, a second dashed line can indicate traffic flowing from the previous PDN connection after the UE 440 moves to the target eNB 434 (T-SGW - S-LGW).

As part of the handover procedure, a new PDN connection can be assigned to the UE 440. In other words, the establishment of the new PDN connection can be piggybacked on the handover procedure, as opposed to having two separate, dissociated procedures as in previous solutions. The new PDN connection can be associated with IP3. A mobility management entity (MME) 410 can indicate to the UE 440 a possibility to streamline the PDN connection. Based on the indication, the UE 440 can request a new PDN connection. The new PDN connection can be established with the target eNB 434 and a collocated target LGW 432 that is closer to the UE's current location. The information related to the new PDN connection can be sent from the MME 410 to the UE 440 in a non-access stratum (NAS) message. As shown in FIG. 4, a third dashed line can indicate traffic flowing from the new PDN connection (T-eNB - T-LGW).

At this point, the UE 440 can have two PDN connections in parallel - a first PDN connection that is associated with IP2 and a second PDN connection that is associated with IP3. Although the first PDN connection (i.e., IP2) can be sub optimal, the preservation of the first PDN connection can be a transient situation because the UE 440 will be invited or expected to migrate traffic to the second PDN connection (i.e., IP3). For DASH-based streaming, web browsing, and IMS-based traffic, this traffic can be migrated to the second PDN connection in a timely manner.

In contrast to the first PDN connection (i.e., IP2), the second PDN connection (i.e., IP3) does not use tromboning for traffic flow because a direct path between the T-eNB 434 and the T-LGW 432 is established based on 3GPP Release 12 SIPTO@LN mechanisms. In previous solutions, the SIPTO@LN with collocated eNB assumed that the SIPTO@LN PDN connection is necessarily released upon handover using a timer mechanism in the S-LGW, as further explained in 3GPP Technical Specification (TS) 23.401 Clause 4.3.15a.3. However, in the present technology, the decision for release of the SIPTO@LN PDN connection (or absence thereof) can be made by the MME 410.

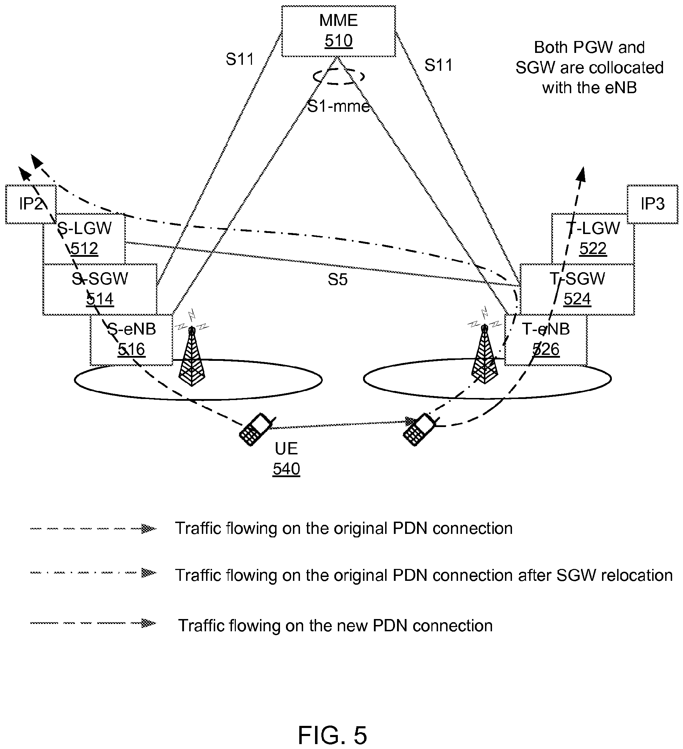

FIG. 5 illustrates initial traffic flow for a user equipment (UE) 540 using a first packet data network (PDN) connection and a modified traffic flow for the UE 540 using a second PDN connection that is triggered based on UE mobility. The UE 540 can initially be located in proximity to a source eNB 516. In this configuration, the UE 540 can establish a packet data network (PDN) connection with a source local gateway (S-LGW) 512 with PDN gateway (PGW) functionality. The UE 540 can be assigned an Internet Protocol (IP) address, which is referred to as IP2. The serving gateway (SGW) functionality for the UE 540 can be a source SGW (e.g., S-SGW 514), which can be collocated with the source eNB (S-eNB) 516. In other words, both the S-LGW 512 and the S-SGW 514 can be collocated with the S-eNB 516. As shown in FIG. 5, a first dashed line can indicate traffic flowing from an initial PDN connection (S-eNB - S-SGW - S-LGW).

The UE 540 can move from the source eNB 516 to a target eNB 526. The target eNB 526 can be collocated with both a T-SGW 524 and a T-LGW 522. The UE 540 can temporarily keep the previous PDN connection (i.e., IP2). As shown in FIG. 5, a second dashed line can indicate traffic flowing from the previous PDN connection after the UE 540 moves to the target eNB 526 (T-eNB - S-LGW). As part of the handover procedure, a new PDN connection can be assigned to the UE 540. The new PDN connection can be associated with IP3. The new PDN connection (i.e., IP3) can be established with the target eNB 526 that is closer to the UE's current location, wherein the target eNB 526 is collocated with both the T-SGW 524 and the T-LGW 522. The UE 540 can maintain the previous PDN connection (i.e., IP2) until the traffic has migrated from the previous PDN connection to the new PDN connection (i.e., IP3). As shown in FIG. 5, a third dashed line can indicate traffic flowing from the new PDN connection (T-eNB - T-SGW - T-LGW).

In this example, both the eNB and the SGW functionality are moved, so an S5 interface can be supported between the target eNB 526 and the LGW functionality (i.e., S-LGW 512) that is collocated with the source eNB 516. The configuration shown in FIG. 5 can be used when the UE 540 does not need an additional PDN connection with IP address preservation, which can occur if the UE 540 is permanently kept in connected mode.

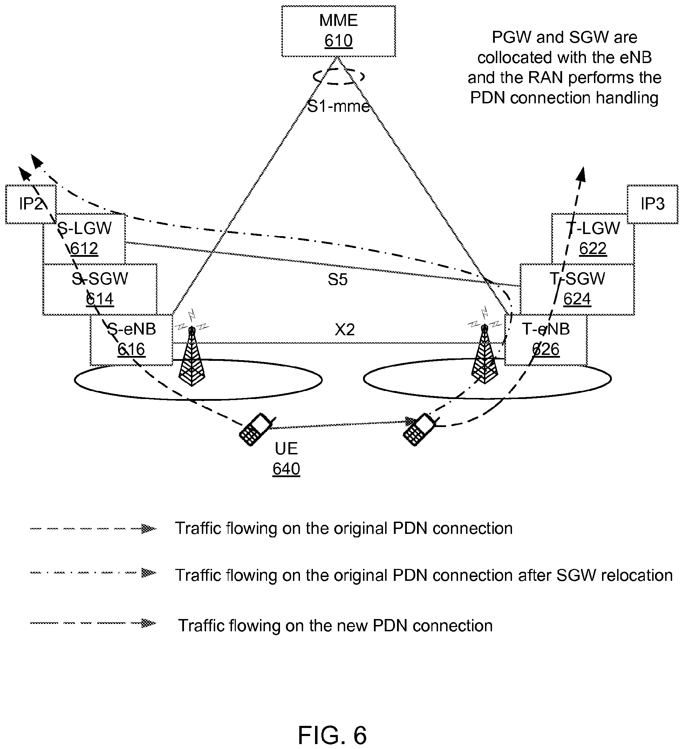

FIG. 6 illustrates initial traffic flow for a user equipment (UE) 640 using a first packet data network (PDN) connection and a modified traffic flow for the UE 640 using a second PDN connection that is triggered based on UE mobility. The UE 640 can initially be located in proximity to a source eNB 616. In this configuration, the UE 640 can establish a packet data network (PDN) connection with a source local gateway (S-LGW) 612 with PDN gateway (PGW) functionality. The UE 640 can be assigned an Internet Protocol (IP) address, which is referred to as IP2. The serving gateway (SGW) functionality for the UE 640 can be a source SGW (e.g., S-SGW 614), which can be collocated with the source eNB (S-eNB) 516. In other words, both the S-LGW 612 and the S-SGW 614 can be collocated with the S-eNB 616. As shown in FIG. 6, a first dashed line can indicate traffic flowing from an initial PDN connection (S-eNB - S-SGW - S-LGW).

The UE 640 can move from the source eNB 616 to a target eNB 626. The target eNB 626 can be collocated with both a T-SGW 624 and a T-LGW 622. The UE 640 can temporarily keep the previous PDN connection (i.e., IP2). As shown in FIG. 6, a second dashed line can indicate traffic flowing from the previous PDN connection after the UE 640 moves to the target eNB 626 (T-eNB - S-LGW). As part of the handover procedure, a new PDN connection can be assigned to the UE 640. The new PDN connection can be associated with IP3. The new PDN connection (i.e., IP3) can be established with the target eNB 626 that is closer to the UE's current location, wherein the target eNB 626 is collocated with both the T-SGW 624 and the T-LGW 622. The UE 640 can maintain the previous PDN connection (i.e., IP2) until the traffic has migrated from the previous PDN connection to the new PDN connection (i.e., IP3). As shown in FIG. 6, a third dashed line can indicate traffic flowing from the new PDN connection (T-eNB - T-SGW - T-LGW).

In this configuration, a mobility management entity (MME) is not involved in session management functionality, which includes the PDN connection establishment. Rather, the PDN connection handling can be performed by a radio access network (RAN), instead of the MME 610. The information related to the PDN connection (as well as session management) can be sent from an eNB (e.g., the S-eNB 616 or the T-eNB 626) to the UE 640 via access stratum messages. In addition, this configuration does not include an S11 interface between the MME 610 and the combined eNB/SGW/LGW node.

In one example, the MME 610 can be used as a proxy function for authentication purposes (e.g., security purposes), as opposed to being used for establishing the PDN connection. The MME 610 can also be used as a quality of service (QoS) proxy. For example, information that comes from a policy and charging control (PCC) infrastructure will be conveyed via the MME 610 to the S-eNB 616 or the T-eNB 626. In this configuration, the handover procedure can be based on an X2 handover procedure, as opposed to an S1 handover procedure, as in previous examples. The X2 handover procedure involves direct signaling between the S-eNB 616 and the T-eNB 626 over the direct X2 interface. After the UE 640 has moved to the target eNB 626, the target eNB 626 can send a NAS1 message to the MME 610. The NAS1 message can be a packet switched notification message that informs the MME 610 that the UE 640 has been successfully moved to the target eNB 626.

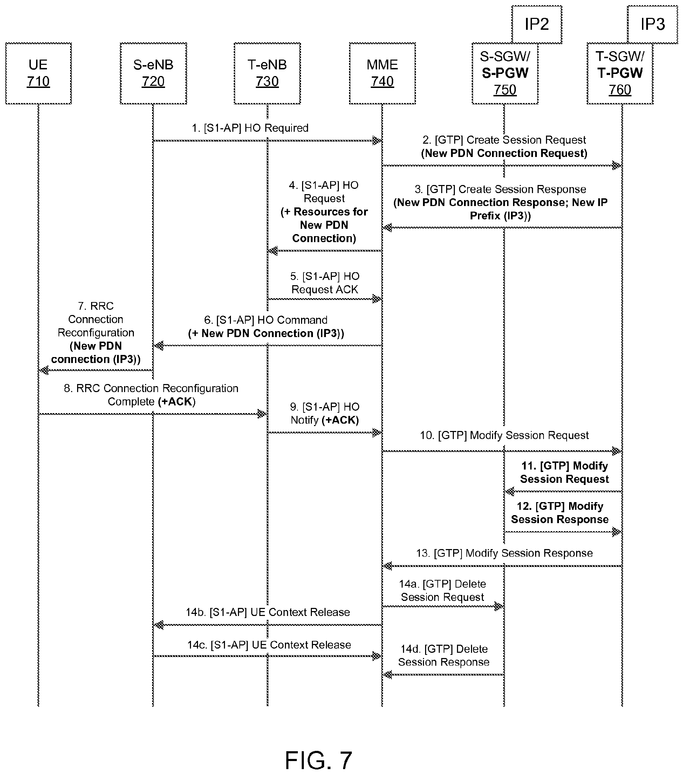

FIG. 7 illustrates an exemplary handover procedure that includes packet data network (PDN) connection establishment for a user equipment (UE). The handover procedure can be performed between a source eNB 720 (or serving eNB) and a target eNB 730 when the UE 710 is moving outside the coverage of the SeNB 720 and within coverage of the target eNB 740. The UE 710 can initially have a packet data network (PDN) connection with a source serving gateway (SGW) / source packet data network (PDN) gateway (PGW) 750. In other words, the SGW and the PGW can be collocated. This PDN connection can be assigned an IP address (e.g., IP2).

The UE 710 can perform radio measurements, and based on these radio measurements, the source eNB 720 can select the target eNB 730 for handing over the UE 710. In action 1, the source eNB 720 can trigger the handover procedure by sending a [S1-MME] handover required message to a mobility management entity (MME) 740.

In action 2, the MME 740 can establish a new S11 session with a target serving gateway (SGW) / target packet data network (PDN) gateway (PGW) 760 by sending a [GTP] create session request message. The MME 740 can establish the new S11 session for the existing PDN connection using a create session procedure. In general, the handover procedure can involve changing the SGW for the UE 710. Therefore, the MME 740 can select the target SGW 760. In addition, PDN connection information about the new PDN connection can be piggybacked on the create session request message. Thus, the create session request message can include an embedded request for creation of the new PDN connection with the target PGW 760 (which is collocated with the target SGW).

In action 2, the MME 740 can determine to streamline the PDN connection (i.e., perform CSIPTO). So the creation session request, which was previously only used to select the target SGW 760, can include the request for establishing the new PDN connection. The target SGW 760 can contact locally a collocated target PDN gateway function. If the target PDN gateway function is not collocated, then GTP signaling can be used to contract the target PDN gateway function. The create session request message can enable the target SGW 760 to locally request the target PDN gateway function to assign new PDN connection resources, which can result in a new IP address for the UE (e.g., IP3).

In action 3, the G-SGW 760 can respond with a [S11] create session response message to the MME 740. The create session response message can confirm both the successful transfer of the S11 session for the old PDN connection (e.g., IP2), as well as information about the new PDN connection (e.g., IP3). In previous solutions, the create session response message was only used to acknowledge the assignment of the SGW. In this solution, the create session response message can include information about the new PDN connection, which can be indicated using a novel PDN connection response parameter. The information can include an assigned IP address/prefix (i.e., IP3) that is being established with the T-PGW 760. The assigned IP address can be an IPv6 address or an IPv4 address.

In action 4, the MME 740 can send an [S1-MME] handover request message to the target eNB (T-eNB) 730. The MME 740 can request radio resources for both the old PDN connection (e.g., IP2) and the new PDN connection (e.g., IP3). In other words, the handover request message can indicate to the target eNB 750 an amount of resources for the UE 710. In previous solutions, the MME 740 can request an assignment of resources based on the UE's traffic. In this configuration, the MME 740 can request approximately twice the resources as in the previous solutions, since the MME 740 is requesting resources for both the old PDN connection (e.g., IP2) and the new PDN connection (e.g., IP3). The UE 710 can potentially have, for example, five PDN connections and the new PDN connection (e.g., IP3) can be assigned for one of the five PDN connections. Therefore, in this example, the requested resources can be for the PDN connection that is being replaced.

In action 5, the target eNB 730 can perform connection admission control to reserve the resources requested in the handover request message. In addition, the target eNB 730 can send an acknowledgement of the handover request.

In action 6, the MME 740 can send an [S1-MME] handover command message to the S-eNB 720. At the same time, the MME 740 can request an establishment of the new PDN connection (i.e., IP3). The establishment of the new PDN connection can be provided as a non-access stratum (NAS) message. The handover command message can include information (as part of the NAS message) for the establishment of the new PDN connection. For example, the information in the NAS message can include an assigned IP address/prefix (IP3), an Evolved Packet System (EPS) bearer identity, an EPS QoS of the bearer, and an access point name (APN). In addition, the information in the NAS message can include a Protocol Configuration Options (PCO) parameter.

In action 7, the MME 740 can send an RRC connection reconfiguration message to the UE 710. In addition, the RRC connection reconfiguration message can transparently carry the NAS message for the establishment of the new PDN connection. In other words, the NAS message that requests the establishment of the new PDN connection can piggyback on the RRC connection reconfiguration message. The RRC connection reconfiguration message can also be referred to as a handover command message that is sent from the S-eNB 720 to the UE 710. The RRC connection reconfiguration message can inform the UE 710 of the target eNB 730, and provides necessary physical layer information to enable the UE 710 to locate the target eNB 730. Thus, the RRC connection reconfiguration message (which includes the NAS message) can notify the UE 710 that the UE 710 is being handed over to the target eNB 730, and that the UE 710 is to establish the new PDN connection using the information in the NAS message. In previous solutions, the UE 710 is not configured to receive NAS messages as part of the RRC connection reconfiguration message.

In action 8, the UE 710 can create the new PDN connection internally. In addition, the UE 710 can perform an access stratum procedure for handover to the target eNB 730. After the UE 710 locates the target eNB 730, the UE 710 can send an RRC reconfiguration complete message to the target eNB 730. The RRC reconfiguration complete message can also be referred to as a handover complete message. The UE 710 can send the RRC reconfiguration complete message in order to acknowledge the handover to the target eNB 730. The RRC reconfiguration complete message can transparently carry a NAS message that acknowledges the establishment of the new PDN connection. The NAS message can include other pertinent information, such as a PCO parameter. The information in the NAS message can be similar to information in a NAS activate default bearer accept message. After action 8, the new PDN connection (i.e., IP3) can be operational. Therefore, the UE 710 can readily use the new IP address prefix (i.e., IP3).

In action 9, the target eNB 730 can send an [S1-AP] handover notify message to the MME 740, which includes this encapsulated NAS message. Thus, the handover notify message can include an acknowledgement of the establishment of the new PDN connection.

In action 10, the MME 740 can send a [GTP] modify session request to the T-SGW / T-PGW 760.

In action 11, the S-SGW / S-PGW 750 can send a [GTP] modify session request to the T-SGW / T-PGW 760, and in response, in action 12, the T-SGW / T-PGW 760 can send a modify session response to the S-SGW / S-PGW 750. In one example, the performance of actions 11 and 12 can preserve the old PDN connection (i.e., IP2). The modify session request message can establish an S5 link between the target SGW function and the source PDN gateway function, thereby preserving the old PDN connection (i.e., IP2). By preserving the old PDN connection (i.e., IP2), the PDN connection establishment procedure can adhere to a make-before-break policy. In other words, the PDN connection establishment can be make-before-break because the second PDN connection (i.e., IP3) is fully operational after action 8, at which point the first PDN connection (i.e., IP2) is also operational.

Actions 13 through 14d are similar to traditional S1 handover procedures.

In one configuration, various network elements can be collocated. For example, the T-SGW / T-PGW 760 can be collocated with the target eNB 730. As a result, some of the operations in FIG. 7 can be combined into a single operation. For example, when the target eNB, the target SGW, and the target PGW are collocated, it is possible to combine actions 2 and 4, actions 3 and 5, actions 14a and 14b, and actions 14c and 14d.

In one example, the IP address assignment as described herein can save signaling resources. In previous solutions, the IP address assignment for IPv6 is performed using external mechanisms. For example, a default router can send a router advertisement message, and based on the router advertisement message, the UE can configure a stateless auto configuration of the IPv6 address. The router advertisement message can provide the IP prefix to the UE, which can be the same IP prefix discussed in action 7. In past solutions, the sending of the IP prefix (e.g., an IPv6 address) can be performed in the user plane with the router advertisement message. In this solution, the IP prefix is being provided in the control plane message.

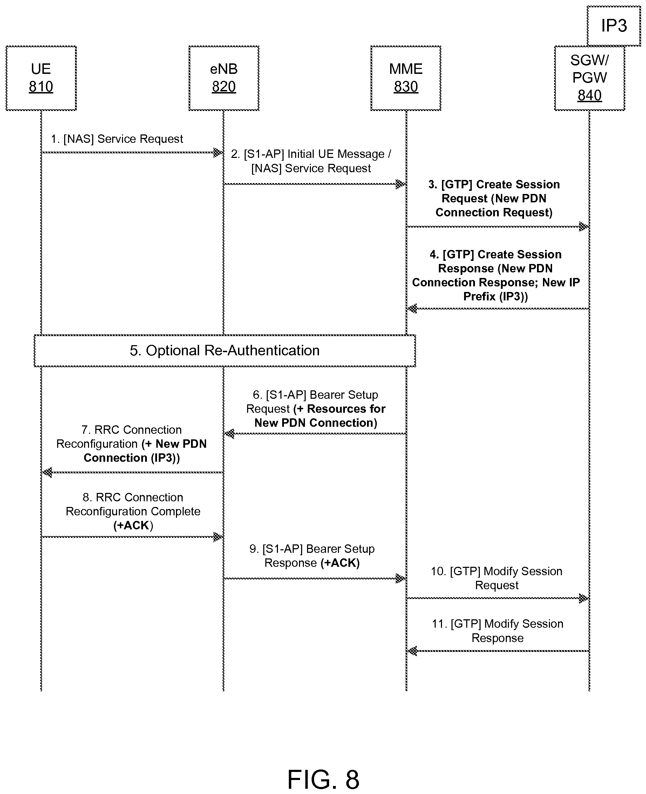

FIG. 8 illustrates an exemplary service request procedure that includes packet data network (PDN) connection establishment for a user equipment (UE). As previously discussed, the integration of the handover procedure with the PDN connection establishment procedure can be applicable to not only connected mode UEs, but also UEs in idle mode. When the UE is in idle mode, the network can page the UE or wait for the UE to return to connected mode. The UE can request to be moved back to connected mode by sending a service request message. For example, the UE can move back to connected mode when the UE has mobile originated data to send.

In this configuration, the PDN connection request can be piggybacked with the service request procedure. The establishment of the new PDN connection can be due to UE mobility. For example, the UE may have moved away from the cell in which the last PDN connection was established. In other words, when the UE indicates a desire to return back to connected mode, the UE can be outside the coverage of a previous evolved node B (eNB). The UE may have moved towards another eNB while in idle mode, and after waking up and returning to connected mode, it may be optimal to switch to a new PDN connection for the UE. In this example, the PDN connection request is not combined with handover, but rather the service request procedure.

In action 1, a user equipment (UE) can trigger the service request procedure by sending a NAS service request message to an evolved node B (eNB) 820.

In action 2, the eNB 820 can forward the NAS service request message in an [S1-MME] initial UE message to a mobility management entity (MME) 830.

In action 3, the MME 830 can determine that the UE 810 has moved away sufficiently from a previous location, thus justifying an assignment of a new IP address. The MME 830 can select a new PGW 840 (or new LGW) for the new PDN connection. In one example, the PGW 840 can be collocated with an SGW. The MME 830 can establish a new S11 session with the target SGW/PGW 840 for the existing PDN connection using an [S11] create session procedure. The MME 830 can send a create session request message to the SGW/PGW 840, which includes an embedded request for creation of the new PDN connection with the selected PGW.

In action 4, the SGW/PGW 840 can send an S11 create session response message to the MME 830. The create session response message can confirm both the successful transfer of the S11 session for an old PDN connection, as well as information or parameters about the new PDN connection that is being established with PGW. In particular, the create session response message can include an assigned IP address or prefix (e.g., IP3) for the new PDN connection.

In action 5, re-authentication can take place for security purposes.

In action 6, the MME 830 can send an [S1-AP] bearer setup request message to the eNB 820. The bearer setup request message can include information on the new PDN connection, wherein the information can be encoded as a NAS message. The bearer setup request message can include the assigned IP address/prefix (e.g., IP3), an EPS bearer identity, an EPS QoS of the bearer, an access point name (APN), and/or a protocol configuration options (PCO) parameter. In one example, the information included in the NAS message that is embedded within the bearer setup request message can be similar to a [NAS] activate default bearer request message. In addition, the bearer setup request message can include a request for radio resources for both the old PDN connection and the new PDN connection (e.g., IP3). In other words, the MME 830 can provide resources for the PDN connection that the UE 810 already has, and can add resources for the new PDN connection. Similar to the handover procedure, as previously described, the resources can be approximately double of the PDN connection that is to be replaced with the new PDN connection.

In action 7, the eNB 820 can send an RRC connection reconfiguration message to the UE 810. The NAS message that includes the information on the new PDN connection (e.g., IP3) can be carried transparently in the RRC connection reconfiguration message. The NAS message can be carried for the establishment of the new PDN connection. In other words, the NAS message that requests the establishment of the new PDN connection can piggyback on the RRC connection reconfiguration message. The RRC connection reconfiguration message can include the newly assigned IP address or prefix (e.g., IP3). In addition, the [NAS] service request message from action 1 can be implicitly confirmed by the establishment of user plane data in action 7.

In action 8, the UE 810 can create the new PDN connection internally. The UE 810 can send an RRC reconfiguration complete message to the eNB 820. The RRC reconfiguration complete message can transparently carry a NAS message that acknowledges the establishment of the new PDN connection. The NAS message can include other pertinent information, such as a PCO parameter. The information in the NAS message can be similar to information in a NAS activate default bearer accept message. After action 8, the new PDN connection (i.e., IP3) can be operational. Therefore, the UE 810 can readily use the new IP address prefix (i.e., IP3).

In action 9, the eNB 820 can send an [S1-AP] bearer setup response message to the MME 830, which includes this encapsulated NAS message. Thus, the bearer setup response message can include an acknowledgement of the establishment of the new PDN connection.

In action 10, the MME 830 can send a [GTP] modify session request message to the SGW/PGW 840. If the MME 830 determines to allocate a new SGW, then the MME 830 can send the modify session request message to the SGW/PGW 840 that is selected, and in action 11, the SGW/PGW 840 can send a [GTP] modify session response message to the MME 830.

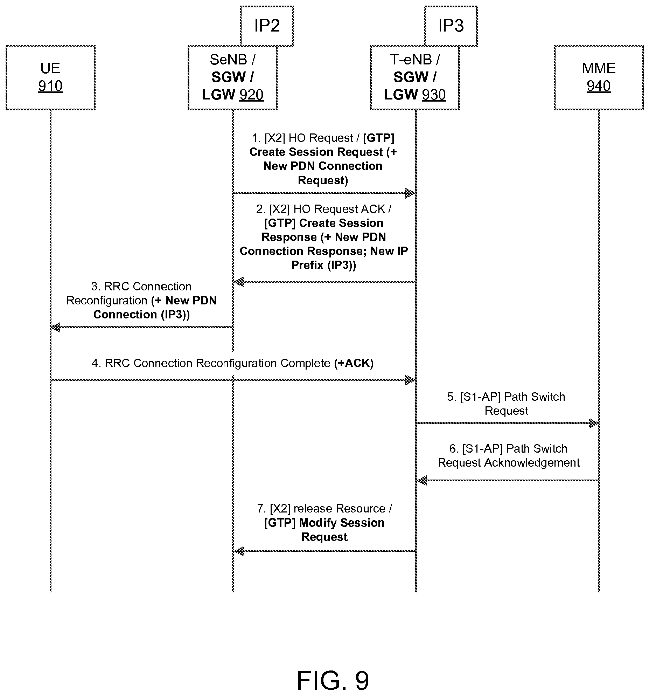

FIG. 9 illustrates an exemplary handover procedure that includes packet data network (PDN) connection establishment for a user equipment (UE). In this configuration, a mobility management entity (MME) is not involved in session management functionality, which includes the PDN connection establishment. In addition, session management information can be conveyed directly using access stratum signaling i.e., without MME involvement.

In action 1, a source evolved node B (eNB) 920 can send an [X2] handover request message to a target eNB 930. In one configuration, the source eNB 920 can be collocated with an SGW and an LGW, and the target eNB 930 can be collocated with an SGW and an LGW. The source eNB 920 can select the target eNB 930 based on measurements received from a user equipment (UE) 910. The handover request message can request radio resources for an existing PDN connection. In addition, the handover request message can request the creation of a new PDN connection. The information contained in the handover request message for the request to create the new PDN connection can be similar to an [S5] create session request message. In addition, the handover request message can include information used to instantiate an S5-like interface between the SGW at the target eNB 930 and the LGW at the source eNB 920.

In action 2, the T-LGW function at the target eNB 930 can reserve the resources for the new PDN connection. The T-LGW function can provide PGW functionality for the target eNB 930. In other words, the target eNB 930 can create the new PDN connection. The target eNB 930 can send an [X2] handover request acknowledgement message to the source eNB 920, which includes a newly assigned IP address/prefix (e.g., IP3) that is associated with the new PDN connection.

In action 3, the source eNB 920 can send an RRC connection reconfiguration message to the UE 910. The RRC connection reconfiguration message can also be referred to as a handover command message. Additional information related to the new PDN connection (e.g., the IP address, an APN, an EPS QoS, and/or optional PCO parameter) can be carried transparently in the RRC connection reconfiguration message. The additional information can be included as an access stratum message that is embedded in the RRC connection reconfiguration message. Since the MME 940 is not involved in the PDN connection establishment, the additional information can be included in access stratum messages, as opposed to non-access stratum (NAS) messages.

In action 4, the UE 910 can create the new PDN connection internally, and perform an access stratum procedure for handover to the target eNB 930. The UE 910 can send an RRC connection reconfiguration complete message to the target eNB 930. The RRC reconfiguration complete message can transparently carry session management information related to the new PDN connection (e.g., the optional PCO parameter). The session management information can be included as an access stratum message that is embedded in the RRC connection reconfiguration complete message. After action 4, the handover can be successfully completed from the radio access perspective.

In action 5, the UE 910 can send an [S1-AP] path switch request message to the MME 940. The path switch request message can inform the MME 940 about the path switch from the source eNB 920 to the target eNB 930. In other words, the UE 910 can notify the MME 940 that the UE 910 has been handed over from the source eNB 920 to the target eNB 930.

In action 6, the MME 940 can send an [S1-AP] path switch response message to the target eNB 930.

In action 7, the target eNB 930 can send an [X2] release resource message to the source eNB 920. The release resource message can trigger, at the source eNB 920, the release of radio resources for the UE 910. Since the UE 910 has been handed over to the target eNB 930, the source eNB 920 no longer has to maintain resources for the UE 910. In addition, the release resource message can include information that instantiates an S5-like interface between the T-SGW that is collocated with the target eNB 930 and the S-LGW that is collocated with the source eNB 920 in order to preserve the old PDN connection (i.e., to achieve a make-before-break connection). In other words, the UE 910 can establish the new PDN connection (i.e., IP3) before release of the old PDN connection (i.e., IP2), so that the UE's traffic can gracefully migrate from the old PDN connection to the new PDN connection.

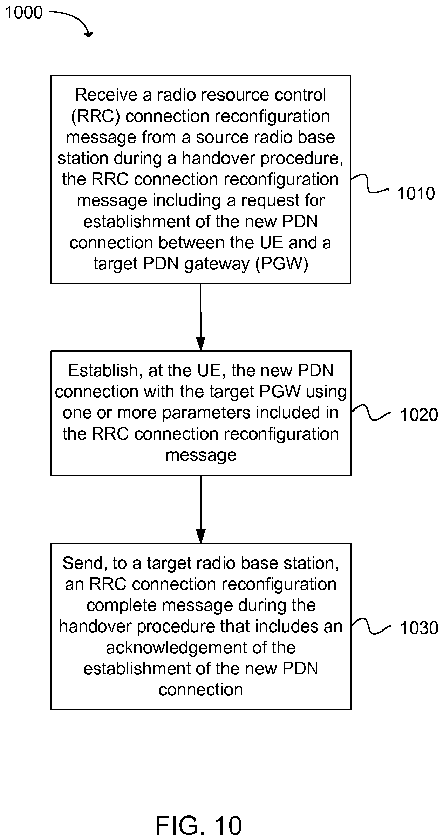

Another example provides functionality 1000 of a user equipment (UE) operable to establish a new packet data network (PDN) connection during handover, as shown in the flow chart in FIG. 10. The functionality can be implemented as a method or the functionality can be executed as instructions on a machine, where the instructions are included on at least one computer readable medium or one non-transitory machine readable storage medium. The UE can include one or more processors configured to receive a radio resource control (RRC) connection reconfiguration message from a radio base station during a handover procedure, the RRC connection reconfiguration message including a request for establishment of the new PDN connection between the UE and a target PDN gateway (PGW), as in block 1010. The UE can include one or more processors configured to establish, at the UE, the new PDN connection with the target PGW using one or more parameters included in the RRC connection reconfiguration message, as in block 1020. The UE can include one or more processors configured to send, to a target radio base station, an RRC connection reconfiguration complete message during the handover procedure that includes an acknowledgement of the establishment of the new PDN connection, as in block 1030.

In one example, the request for establishment of the new PDN connection is a non-access stratum (NAS) message that is included in the RRC connection reconfiguration message. In another example, the acknowledgement of the establishment of the new PDN connection is a non-access stratum (NAS) message that is included in the RRC connection reconfiguration complete message.

In one example, the one or more parameters included in the RRC connection reconfiguration message include at least one of: an assigned Internet Protocol (IP) address or prefix, an Evolved Packet System (EPS) bearer identity, quality of service (QoS) of the EPS bearer, or an access point name (APN). In another example, the one or more parameters included in the RRC connection reconfiguration message include a protocol configuration option (PCO) parameter. In yet another example, the one or more processors are further configured to: maintain a previous PDN connection with a source local gateway (LGW) with PGW functionality that is collocated with the source radio base station; or maintain a previous PDN connection with a standalone source PGW.

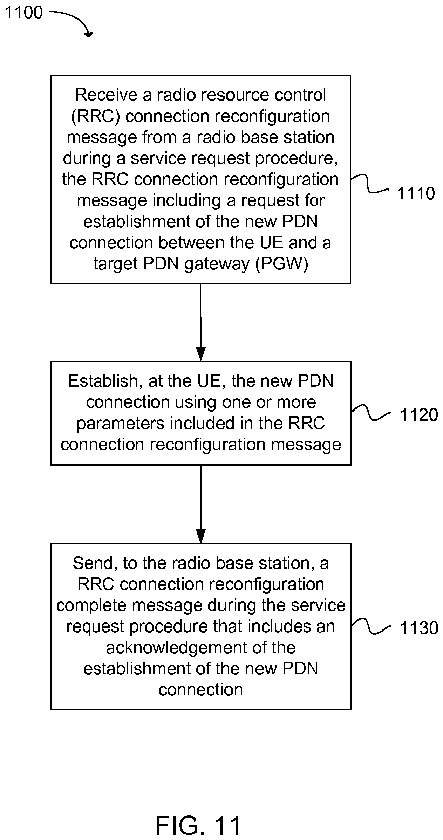

Another example provides functionality 1100 of a user equipment (UE) operable to establish a new packet data network (PDN) connection during a service request, as shown in the flow chart in FIG. 11. The functionality can be implemented as a method or the functionality can be executed as instructions on a machine, where the instructions are included on at least one computer readable medium or one non-transitory machine readable storage medium. The UE can include one or more processors configured to receive a radio resource control (RRC) connection reconfiguration message from a radio base station during a service request procedure, the RRC connection reconfiguration message including a request for establishment of the new PDN connection between the UE and a target PDN gateway (PGW), as in block 1110. The UE can include one or more processors configured to establish, at the UE, the new PDN connection using one or more parameters included in the RRC connection reconfiguration message, as in block 1120. The UE can include one or more processors configured to send, to the radio base station, a RRC connection reconfiguration complete message during the service request procedure that includes an acknowledgement of the establishment of the new PDN connection, as in block 1130.

In one example, the one or more processors are further configured to trigger the service request procedure by sending a non-access stratum (NAS) service request message to the radio base station. In another example, the request for establishment of the new PDN connection is a non-access stratum (NAS) message that is included in the RRC connection reconfiguration message.

In one example, the acknowledgement of the establishment of the new PDN connection is a non-access stratum (NAS) message that is included in the RRC connection reconfiguration complete message. In another example, the one or more parameters included in the RRC connection reconfiguration message include at least one of: an assigned Internet Protocol (IP) address or prefix, an Evolved Packet System (EPS) bearer identity, quality of service (QoS) of the EPS bearer, or an access point name (APN).

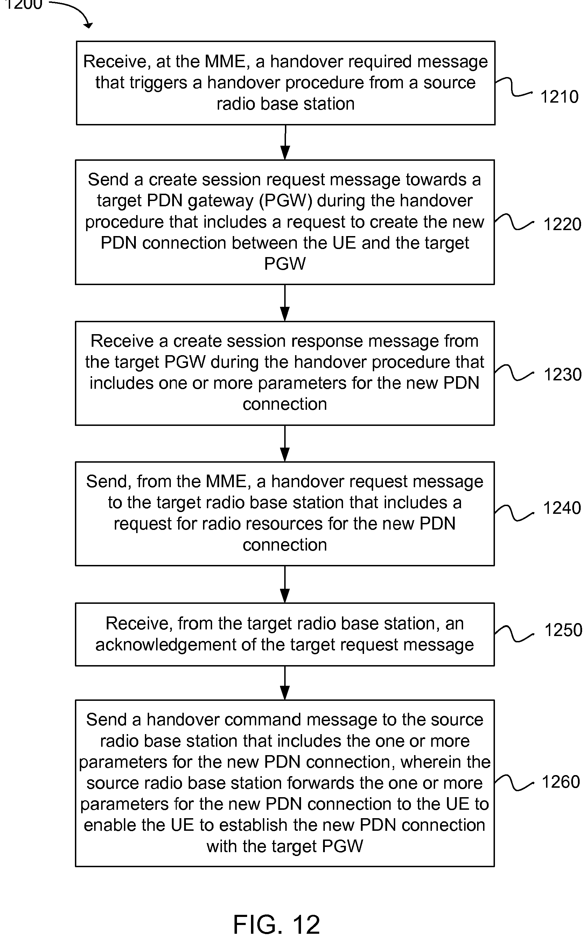

Another example provides functionality 1200 of a mobility management entity (MME) operable to facilitate establishment of a new packet data network (PDN) connection for a user equipment (UE) during handover, as shown in the flow chart in FIG. 12. The functionality can be implemented as a method or the functionality can be executed as instructions on a machine, where the instructions are included on at least one computer readable medium or one non-transitory machine readable storage medium. The MME can include one or more processors configured to receive, at the MME, a handover required message that triggers a handover procedure from a source radio base station, as in block 1210. The MME can include one or more processors configured to send a create session request message towards a target PDN gateway (PGW) during the handover procedure that includes a request to create the new PDN connection between the UE and the target PGW, as in block 1220. The MME can include one or more processors configured to receive a create session response message from the target PGW during the handover procedure that includes one or more parameters for the new PDN connection, as in block 1230. The MME can include one or more processors configured to send, from the MME, a handover request message to the target radio base station that includes a request for radio resources for the new PDN connection, as in block 1240. The MME can include one or more processors configured to receive, from the target radio base station, an acknowledgement of the target request message, as in block 1250. The MME can include one or more processors configured to send a handover command message to the source radio base station that includes the one or more parameters for the new PDN connection, wherein the source radio base station forwards the one or more parameters for the new PDN connection to the UE to enable the UE to establish the new PDN connection with the target PGW, as in block 1260.

In one example, the one or more parameters for the new PDN connection are part of a non-access stratum (NAS) message that is included in the handover command message. In another example, the one or more parameters for the new PDN connection include at least one of: an assigned Internet Protocol (IP) address or prefix, an Evolved Packet System (EPS) bearer identity, quality of service (QoS) of the EPS bearer, or an access point name (APN). In another example, the one or more processors are further configured to receive a handover notify message from the target radio base station that includes an acknowledgement of the establishment of the new PDN connection.

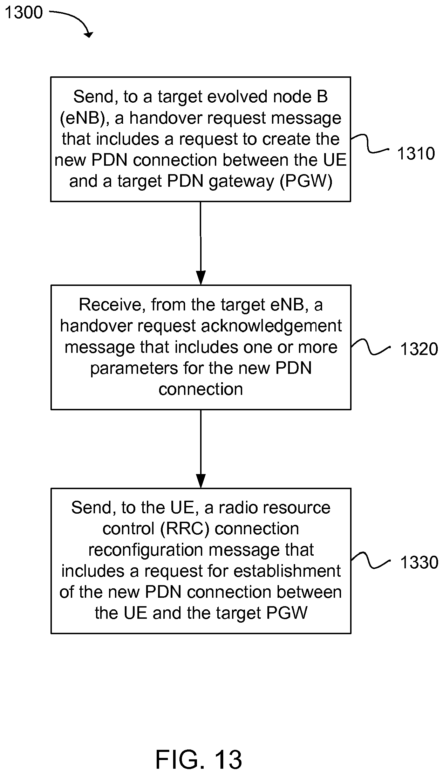

Another example provides functionality 1300 of a source radio base station operable to facilitate establishment of a new packet data network (PDN) connection for a user equipment (UE) during handover, as shown in the flow chart in FIG. 13. The functionality can be implemented as a method or the functionality can be executed as instructions on a machine, where the instructions are included on at least one computer readable medium or one non-transitory machine readable storage medium. The source radio base station can include one or more processors configured to send, to a target radio base station, a handover request message that includes a request to create the new PDN connection between the UE and a target PDN gateway (PGW), as in block 1310. The source radio base station can include one or more processors configured to receive, from the target radio base station, a handover request acknowledgement message that includes one or more parameters for the new PDN connection, as in block 1320. The source radio base station can include one or more processors configured to send, to the UE, a radio resource control (RRC) connection reconfiguration message that includes a request for establishment of the new PDN connection between the UE and the target PGW, as in block 1330.

In one example, the one or more processors are configured to send the request for establishment of the new PDN connection to the UE to enable the UE to create the new PDN connection with the target PGW using one or more parameters included in the RRC connection reconfiguration message and send an acknowledgement of the creation of the new PDN connection to the target radio base station using an access stratum (AS) message. In another example, the source radio base station is collocated with a source serving gateway (SGW) that includes PGW functionality.

In one example, the one or more processors are further configured to receive a release resource message from the target radio base station, wherein the release resource message includes information to maintain a previous PDN connection between the UE a source local gateway (LGW) with PGW functionality that is collocated with the source radio base station. In another example, the request to create the new PDN connection is included in the RRC connection reconfiguration message. In yet another example, the one or more parameters included in the RRC connection reconfiguration message include at least one of: an assigned Internet Protocol (IP) address or prefix, an Evolved Packet System (EPS) bearer identity, quality of service (QoS) of the EPS bearer, or an access point name (APN).

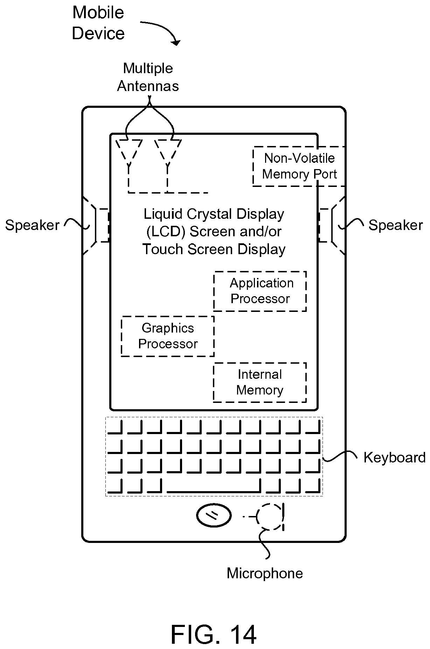

FIG. 14 provides an example illustration of the wireless device, such as an user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard including 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN.

FIG. 14 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, can take the form of program code (i.e., instructions) embodied in tangible media, such as floppy diskettes, CD-ROMs, hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a RAM, EPROM, flash drive, optical drive, magnetic hard drive, solid state drive, or other medium for storing electronic data. The node and wireless device can also include a transceiver module, a counter module, a processing module, and/or a clock module or timer module. One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module can be implemented as a hardware circuit comprising custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits or multiple processors can be used to implement the functional units described in this specification. For example, a first hardware circuit or a first processor can be used to perform processing operations and a second hardware circuit or a second processor (e.g., a transceiver or a baseband processor) can be used to communicate with other entities. The first hardware circuit and the second hardware circuit can be integrated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

Reference throughout this specification to "an example" means that a particular feature, structure, or characteristic described in connection with the example is included in at least one embodiment of the present technology. Thus, appearances of the phrases "in an example" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology can be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics can be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the scope of the claims set forth below.

## Claims

1. A user equipment, UE (270), configured to establish a new packet data network, PDN, connection during handover, the UE (270) comprising one or more processors configured to:
receive a radio resource control, RRC, connection reconfiguration message from a source radio base (250) station during a handover procedure, the RRC connection reconfiguration message including a handover command, a request for establishment of the new PDN connection between the UE (270) and a target PDN gateway, PGW(210), and a new IP address assigned to the new PDN connection, wherein the request for establishment of the new PDN connection is a non-access stratum, NAS, message that is included in the RRC connection reconfiguration message;
establish, at the UE (270), the new PDN connection with the target PGW (210) and perform an access stratum procedure for handover to a target radio base station (260) using one or more parameters included in the RRC connection reconfiguration message; and
send, to the target radio base station (260), an RRC connection reconfiguration complete message during the handover procedure that includes an acknowledgement of the establishment of the new PDN connection.

2. The UE (270) of claim 1, wherein:
the acknowledgement of the establishment of the new PDN connection is a non-access stratum, NAS, message that is included in the RRC connection reconfiguration complete message.

3. The UE (270) of claim 1, wherein:
the one or more parameters included in the RRC connection reconfiguration message include at least one of: an Evolved Packet System, EPS, bearer identity, quality of service, QoS, of the EPS bearer, or an access point name, APN; or
the one or more parameters included in the RRC connection reconfiguration message include a protocol configuration option, PCO, parameter.

4. The UE (270) of claim 1, wherein the one or more processors are further configured to:
maintain a previous PDN connection with a source local gateway, LGW (250), with PGW functionality that is collocated with the source radio base station (250); or
maintain a previous PDN connection with a standalone source PGW.

5. A source radio base station (250) configured to enable establishment of a new packet data network, PDN, connection for a user equipment, UE (270), during handover, the source radio base (250) station comprising one or more processors configured to:
send, to a target radio base station (260), a handover request message that includes a request to create the new PDN connection between the UE (210) and a target PDN gateway, PGW (210);
receive, from the target radio base station (260), a handover request acknowledgement message that includes one or more parameters for the new PDN connection; and
send, to the UE (270), a radio resource control, RRC, connection reconfiguration message that includes a handover command, a request for establishment of the new PDN connection between the UE (270) and the target PGW (210), and a new IP assigned to the new PDN connection;
wherein the request for establishment of the new PDN connection is a non-access stratum, NAS, message that is included in the RRC connection reconfiguration message; and
wherein the request for establishment of the new PDN connection to the UE (270) enables the UE (270) to create the new PDN connection with the target PGW (210) and to perform an access stratum procedure for handover to the target radio base station using one or more parameters included in the RRC connection reconfiguration message and send an acknowledgement of the creation of the new PDN connection to the target radio base station (260) using an access stratum, AS, message.

6. The source radio base station (250) of claim 5, wherein the source radio base station (250) is collocated with a source local gateway, LGW (250), that includes PGW functionality.

7. The source radio base station (250) of claim 5, wherein the one or more processors are further configured to receive a release resource message from the target radio base station (260), wherein the release resource message includes information to maintain a previous PDN connection between the UE (270) a source local gateway, LGW (250), with PGW functionality that is collocated with the source radio base station (250).

8. The source radio base station (250) of claim 5, wherein the request to create the new PDN connection is included in the RRC connection reconfiguration message.

9. The source radio base station (250) of claim 5, wherein the one or more parameters included in the RRC connection reconfiguration message include at least one of: an assigned Internet Protocol, IP, address or prefix, an Evolved Packet System, EPS, bearer identity, quality of service, QoS, of the EPS bearer, or an access point name, APN.

## Patentansprüche

1. Benutzergerät, UE (270), das dazu ausgelegt ist, eine neue Paketdatennetz-, PDN-, Verbindung während der Übergabe aufzubauen, wobei das UE (270) einen oder mehrere Prozessoren umfasst, die dazu ausgelegt sind:
eine Funkressourcensteuerungs-, RRC-Verbindungsrekonfigurationsnachricht von einer Quellfunkbasisstation (250) während eines Übergabevorgangs zu empfangen, wobei die RRC-Verbindungsrekonfigurationsnachricht einen Übergabebefehl, eine Anforderung zum Aufbauen der neuen PDN-Verbindung zwischen dem UE (270) und einem Ziel-PDN-Gateway, PGW (210), und eine der neuen PDN-Verbindung zugewiesene neue IP-Adresse beinhaltet, wobei die Anforderung zum Aufbauen der neuen PDN-Verbindung eine Nicht-Zugriffsschicht-, NAS-, Nachricht ist, die in der RRC-Verbindungsrekonfigurationsnachricht enthalten ist;
Aufbauen der neuen PDN-Verbindung mit dem Ziel-PGW (210) an dem UE (270) und Durchführen eines Zugriffsschichtvorgangs für die Übergabe an eine Zielfunkbasisstation (260) unter Verwendung eines oder mehrerer Parameter, die in der RRC-Verbindungsrekonfigurationsnachricht enthalten sind; und
während des Übergabevorgangs eine RRC-Verbindungsrekonfigurationsvollständigkeitsnachricht an die Zielfunkbasisstation (260) zu senden, die eine Bestätigung für das Aufbauen der neuen PDN-Verbindung beinhaltet.

2. UE (270) nach Anspruch 1, wobei:
die Bestätigung für das Aufbauen der neuen PDN-Verbindung eine Nicht-Zugriffsschicht-, NAS, Nachricht ist, die in der RRC-Verbindungsrekonfigurationsvollständigkeitsnachricht beinhaltet ist.

3. UE (270) nach Anspruch 1, wobei:
der eine oder die mehreren Parameter, die in der RRC-Verbindungsrekonfigurationsnachricht beinhaltet sind, beinhalten: eine Evolved Packet System, EPS, Trägeridentität und/oder Dienstgüte, QoS, des EPS-Trägers und/oder einen Zugriffspunktnamen, APN; oder
der eine oder mehrere Parameter, die in der RRC-Verbindungsrekonfigurationsnachricht beinhaltet sind, einen Parameter für eine Protokollkonfigurationsoption, PCO, beinhalten.

4. UE (270) nach Anspruch 1, wobei der eine oder die mehreren Prozessoren ferner dazu ausgelegt sind:
eine frühere PDN-Verbindung mit einem lokalen Quell-Gateway, LGW (250), mit PGW-Funktionalität aufrechtzuerhalten, das mit der Quellfunkbasisstation (250) kollokiert ist; oder
eine vorherige PDN-Verbindung mit einem eigenständigen Quell-PGW aufrechtzuerhalten.

5. Quellfunkbasisstation (250), die dazu ausgelegt ist, das Aufbauen einer neuen Paketdatennetz-, PDN-, Verbindung für ein Benutzergerät, UE (270), während einer Übergabe zu ermöglichen, wobei die Quellfunkbasisstation (250) einen oder mehrere Prozessoren umfasst, die dazu ausgelegt sind:
an eine Zielfunkbasisstation (260) eine Übergabe-Anforderungsnachricht zu senden, die eine Anforderung zum Erstellen der neuen PDN-Verbindung zwischen dem UE (210) und einem Ziel-PDN-Gateway, PGW (210), beinhaltet;
von der Zielfunkbasisstation (260) eine Übergabeanforderung-Bestätigungsnachricht zu empfangen, die einen oder mehrere Parameter für die neue PDN-Verbindung beinhaltet; und
an das UE (270) eine Funkressourcensteuerungs-, RRC-, Verbindungsrekonfigurationsnachricht zu senden, die einen Übergabebefehl, eine Anforderung zum Aufbauen der neuen PDN-Verbindung zwischen dem UE (270) und dem Ziel-PGW (210) und eine neue IP, die der neuen PDN-Verbindung zugewiesen ist, beinhaltet;
wobei die Anforderung zum Aufbauen der neuen PDN-Verbindung eine Nicht-Zugriffsschicht-, NAS, Nachricht ist, die in der RRC-Verbindungsrekonfigurationsnachricht beinhaltet ist; und
wobei die Anforderung zum Aufbauen der neuen PDN-Verbindung an das UE (270) es dem UE (270) ermöglicht, die neue PDN-Verbindung mit dem Ziel-PGW (210) zu erstellen und einen Zugriffsschichtvorgang für die Übergabe an die Zielfunkbasisstation unter Verwendung eines oder mehrerer Parameter, die in der RRC-Verbindungsrekonfigurationsnachricht enthalten sind, durchzuführen und eine Bestätigung des Erstellens der neuen PDN-Verbindung an die Zielfunkbasisstation (260) unter Verwendung einer Zugriffsschichtnachricht, AS-Nachricht, zu senden.

6. Quellfunkbasisstation (250) nach Anspruch 5, wobei die Quellfunkbasisstation (250) mit einem lokalen Quell-Gateway, LGW (250), kollokiert ist, das PGW-Funktionalität beinhaltet.

7. Quellfunkbasisstation (250) nach Anspruch 5, wobei der eine oder die mehreren Prozessoren ferner dazu ausgelegt sind, eine Freigabe-Ressourcen-Nachricht von der Zielfunkbasisstation (260) zu empfangen, wobei die Freigabe-Ressourcen-Nachricht Informationen zum Aufrechterhalten einer vorherigen PDN-Verbindung zwischen dem UE (270) und einem lokalen Quell-Gateway, LGW (250), mit PGW-Funktionalität, die mit der Quellfunkbasisstation (250) kollokiert ist, enthält.

8. Quellfunkbasisstation (250) nach Anspruch 5, wobei die Anforderung, die neue PDN-Verbindung erstellen, in der RRC-Verbindungsrekonfigurationsnachricht beinhaltet ist.

9. Quellfunkbasisstation (250) nach Anspruch 5, wobei der eine oder mehrere Parameter, die in der RRC-Verbindungsrekonfigurationsnachricht beinhaltet sind, beinhalten: eine zugewiesene Internetprotokoll-, IP-, Adresse und/oder ein Präfix, und/oder eine Evolved Packet System-, EPS-, Trägeridentität, und/oder eine Dienstgüte, QoS, des EPS-Trägers und/oder einen Zugriffspunktnamen, APN.

## Revendications

1. Équipement utilisateur, UE (270), configuré pour établir une nouvelle connexion de réseau de données par paquets, PDN, pendant un transfert, l'UE (270) comprenant un ou plusieurs processeurs configurés pour :
recevoir un message de reconfiguration de connexion de contrôle des ressources radio, RRC, d'une station de base radio source (250) pendant une procédure de transfert, le message de reconfiguration de connexion RRC comprenant une commande de transfert, une demande d'établissement de la nouvelle connexion PDN entre l'UE (270) et une passerelle PDN cible, PGW (210), et une nouvelle adresse IP attribuée à la nouvelle connexion PDN, où la demande d'établissement de la nouvelle connexion PDN est un message de strate de non-accès, NAS, qui est inclus dans le message de reconfiguration de connexion RRC ;
établir, au niveau de l'UE (270), la nouvelle connexion PDN avec la PGW cible (210) et exécuter une procédure de strate d'accès pour le transfert vers une station de base radio cible (260) en utilisant un ou plusieurs paramètres inclus dans le message de reconfiguration de connexion RRC ; et
envoyer, à la station de base radio cible (260), un message d'achèvement de reconfiguration de connexion RRC pendant la procédure de transfert qui comprend un accusé de réception de l'établissement de la nouvelle connexion PDN.

2. UE (270) selon la revendication 1, dans lequel :
l'accusé de réception de l'établissement de la nouvelle connexion PDN est un message de strate de non-accès, NAS, qui est inclus dans le message d'achèvement de reconfiguration de connexion RRC.

3. UE (270) selon la revendication 1, dans lequel :
les un ou plusieurs paramètres inclus dans le message de reconfiguration de connexion RRC comprennent au moins l'un des éléments suivants : une identité de support EPS, Evolved Packet System, une qualité de service, QoS, du support EPS, ou un nom de point d'accès, APN ; ou
les un ou plusieurs paramètres inclus dans le message de reconfiguration de connexion RRC comprennent un paramètre d'option de configuration de protocole, PCO.

4. UE (270) selon la revendication 1, dans lequel les un ou plusieurs processeurs sont en outre configurés pour :
maintenir une connexion PDN précédente avec une passerelle locale source, LGW (250), avec une fonctionnalité PGW qui est colocalisée avec la station de base radio source (250) ; ou
maintenir une connexion PDN précédente avec une PGW source autonome.

5. Station de base radio source (250) configurée pour permettre l'établissement d'une nouvelle connexion de réseau de données par paquets, PDN, pour un équipement utilisateur, UE (270), pendant un transfert, la station de base radio source (250) comprenant un ou plusieurs processeurs configurés pour :
envoyer, à une station de base radio cible (260), un message de demande de transfert qui comprend une demande de création de la nouvelle connexion PDN entre l'UE (210) et une passerelle PDN cible, PGW (210) ;
recevoir, de la station de base radio cible (260), un message d'accusé de réception de demande de transfert qui comprend un ou plusieurs paramètres pour la nouvelle connexion PDN ; et
envoyer, à l'UE (270), un message de reconfiguration de connexion de contrôle des ressources radio, RRC, qui comprend une commande de transfert, une demande d'établissement de la nouvelle connexion PDN entre l'UE (270) et la PGW cible (210), et un nouvel IP attribué à la nouvelle connexion PDN ;
où la demande d'établissement de la nouvelle connexion PDN est un message de strate de non-accès, NAS, qui est inclus dans le message de reconfiguration de connexion RRC ; et
où la demande d'établissement de la nouvelle connexion PDN à l'UE (270) permet à l'UE (270) de créer la nouvelle connexion PDN avec la PGW cible (210) et d'exécuter une procédure de strate d'accès pour le transfert vers la station de base radio cible en utilisant un ou plusieurs paramètres inclus dans le message de reconfiguration de connexion RRC et d'envoyer un accusé de réception de la création de la nouvelle connexion PDN à la station de base radio cible (260) en utilisant un message de strate d'accès, AS.

6. Station de base radio source (250) selon la revendication 5, dans laquelle la station de base radio source (250) est colocalisée avec une passerelle locale source, LGW (250), qui comprend une fonctionnalité PGW.

7. Station de base radio source (250) selon la revendication 5, dans laquelle les un ou plusieurs processeurs sont en outre configurés pour recevoir un message de libération de ressources de la station de base radio cible (260), où le message de libération de ressources comprend des informations pour maintenir une connexion PDN précédente entre l'UE (270) et une passerelle locale source, LGW (250), avec une fonctionnalité PGW qui est colocalisée avec la station de base radio source (250).

8. Station de base radio source (250) selon la revendication 5, dans laquelle la demande de création de la nouvelle connexion PDN est incluse dans le message de reconfiguration de connexion RRC.

9. Station de base radio source (250) selon la revendication 5, dans laquelle les un ou plusieurs paramètres inclus dans le message de reconfiguration de connexion RRC comprennent au moins l'un des éléments suivants : une adresse ou un préfixe de protocole Internet, IP, attribué, une identité de support EPS, Evolved Packet System, une qualité de service, QoS, du support EPS, ou un nom de point d'accès, APN.
